Europäisches Patentamt

European Patent Office

Office européen des brevets

(19)

(11) **EP 0 851 568 B1**

(12) **FASCICULE DE BREVET EUROPEEN**

(45) Date de publication et mention
de la délivrance du brevet:
**11.06.2003 Bulletin 2003/24**

(51) Int Cl.⁷: **H02M 7/48**

(21) Numéro de dépôt: **97403005.8**

(22) Date de dépôt: **11.12.1997**

(54) **Dispositif électrique de conversion de l'énergie électrique**

Vorrichtung zum Umsetzen von elektrischer Energie

Device for conversion of electric energy

(84) Etats contractants désignés:
**AT BE CH DE DK ES FR GB IE IT LI LU NL PT SE**

(30) Priorité: **30.12.1996 FR 9616192**

(43) Date de publication de la demande:
**01.07.1998 Bulletin 1998/27**

(73) Titulaire: **ALCATEL**
**75008 Paris (FR)**

(72) Inventeurs:
• **Tachon, Olivier**
**31071 Toulouse Cedex (FR)**
• **Fadel, Maurice**
**31071 Toulouse Cedex (FR)**

• **Meynard, Thierry**
**31071 Toulouse Cedex (FR)**
• **Carrere, Philippe**
**75014 Paris (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(56) Documents cités:
**EP-A- 0 720 280     EP-A- 0 720 282**
**EP-A- 0 731 554**

**Description**

La présente invention concerne les dispositifs électroniques de conversion de l'énergie électrique du type décrit dans la demande de brevet FR - 2 679 715 A1 et une installation d'alimentation en faisant usage.

Le convertisseur décrit dans cette demande de brevet est illustré, à titre d'exemple, par la figure 1 ci-annexée. Il comprend essentiellement, entre une source de tension SE et une source de courant C, une pluralité de cellules de commutation commandables CL1, CL2..., CLn+1, chacune ayant deux interrupteurs T1, T'1; T2, T'2...; Tn+1, T'n+1, avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule CL1 étant connectée à ladite source de courant C, tandis que la paire de pôles aval d'une dernière cellule CLn+1 est connectée à ladite source de tension SE, ce convertisseur comprenant encore un condensateur C1, C2..., Cn+1, pour chaque cellule, sauf que celui de la dernière peut être omis quand ladite source de tension SE est apte à en jouer le rôle, connecté entre les deux pôles de la paire de pôles aval de la cellule, ainsi que des moyens de commande (non représentés) régissant le fonctionnement nominal du convertisseur en agissant sur les interrupteurs des cellules successives de sorte que les deux interrupteurs d'une même cellule soient toujours respectivement dans des états de conduction opposés (ce qui est illustré par des liaisons de commande telles que lc1), de sorte aussi que, en réponse à un signal de commande de cellule fourni par lesdits moyens de commande, l'un des deux interrupteurs d'une même cellule soit successivement dans un premier état de conduction, puis dans un second état de conduction durant une période de convertisseur cycliquement répétée, et de sorte enfin que, en réponse à des signaux de commande de cellules identiques mais décalés dans le temps d'une fraction de ladite période de convertisseur, les interrupteurs des cellules successives aient respectivement le même fonctionnement, mais décalé dans le temps de ladite fraction de période.

De préférence, ladite fraction de période est égale à l'inverse du nombre n+1 de cellules, soit $2\pi/n+1$, ce qui est optimal en ce qui concerne les harmoniques engendrés sur la sortie et favorise un équilibrage spontané des tensions de charge des condensateurs du convertisseur. Un autre décalage est cependant concevable, de même que des décalages différents entre les divers étages.

Dans un tel convertisseur, les condensateurs successifs C1, C2..., Cn+1 ont des tensions de charge moyennes respectivement croissantes, la tension de charge moyenne du condensateur associé à chacune desdites cellules étant égale au produit d'une tension VE issue de ladite source de tension SE, de l'inverse du nombre de cellules du convertisseur et du rang de la cellule, soit VE/3, 2VE/3, VE, lorsque n+1 = 3, c'est-à-dire lorsque le convertisseur a trois cellules seulement.

Bien entendu, ce qui précède s'applique pour d'autres valeurs de n, du moment qu'il y a deux cellules au moins, pour plus de trois cellules en particulier.

Dans ce qui suit on dénommera convertisseur multiniveaux un convertisseur répondant à la description qui précède.

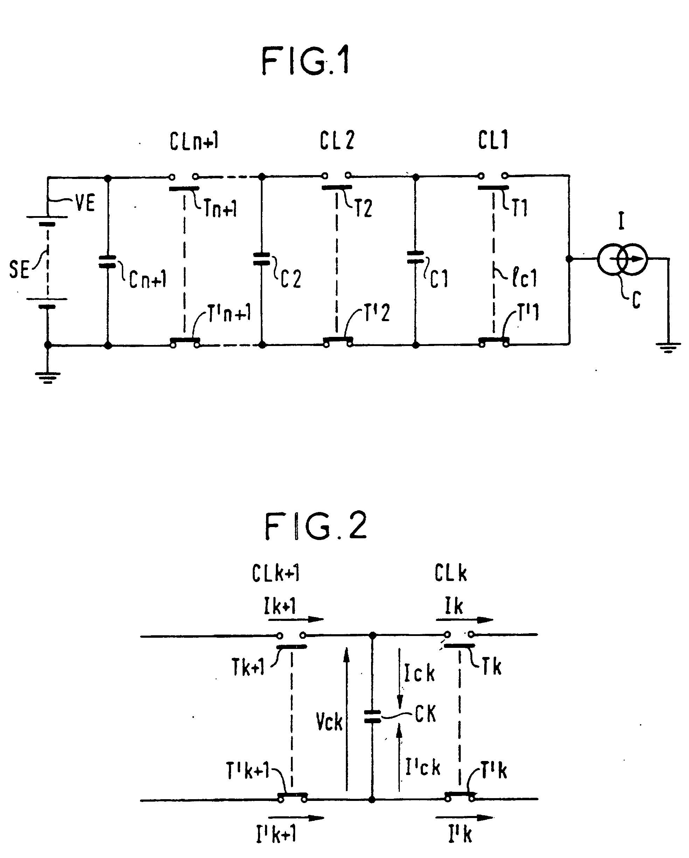

Pour examiner plus facilement comment doit nominalement évoluer la charge d'un des condensateurs d'un convertisseur multiniveaux conforme à ce qui précède, on se référera à la figure 2 qui représente une cellule de commutation quelconque CLk, avec ses interrupteurs Tk, T'k, le condensateur Ck associé à cette cellule, ainsi que la cellule suivante CLk+1, avec ses interrupteurs Tk+1, T'k+1.

Compte tenu du couplage entre les interrupteurs de chaque cellule, Tk, T'k ; Tk+1, T'k+1, l'ensemble de deux cellules imbriquées Tk-Tk+1 représenté à la figure 2 possède quatre états :

a) un premier état où, Tk et Tk+1 étant bloqués, la tension de charge de Ck n'évolue pas ;
b) un deuxième état où, Tk et Tk+1 étant conducteurs, la tension de charge de Ck n'évolue pas non plus, parce qu'alors T'k et T'k+1 sont bloqués ;
c) un troisième état où, Tk étant conducteur et Tk+1 bloqué, la source de courant C impose un courant Ik égal à I à travers Tk, alors que le courant I'k à travers T'k est nul. L'état de Tk+1 impose un courant Ik+1 nul, alors que le courant I'k+1 est égal à I, tandis que le courant I'ck dans le condensateur Ck est égal à I ;
d) un quatrième état où, Tk étant bloqué et Tk+1 conducteur, la source de courant C impose un courant I'k égal à I à travers T'k, alors que le courant Ik à travers Tk est nul. L'état de Tk+1 impose un courant Ik+1 égal à I, alors que le courant I'k+1 est nul, tandis que le courant Ick dans le condensateur Ck est égal à I.

Les courants I'ck = I'k+1 et Ick = Ik+1 apportent au condensateur Ck des charges additionnelles opposées, dans les troisième et quatrième états ci-dessus ; on dira que les premières sont négatives et les secondes positives. Les courants correspondant à ces deux états sont imposés par la source de courant. Si la source de courant est rigoureusement continue, toutes choses égales par ailleurs, les courants imposés par la source de courant dans les phases c) et d) sont les mêmes et de sens opposés, à tout instant, au long des intervalles de conduction de Tk et Tk+1 (nominalement égaux et décalés dans le temps, comme indiqué plus haut). Cela entraîne que la charge de Ck, modifiée négativement puis positivement de quantités égales, ne varie pas au cours d'une période de convertisseur.

Dans un système idéal (source de courant parfaite, impédance infinie), les courants Ick et I'ck sont déterminés par la source de courant. De manière plus concrète, lorsque l'impédance de la source de courant n'est pas infinie, le courant de la source de courant dépend de la tension à ses bornes et donc des tensions Vck des condensateurs. S'il advient que la tension de charge Vck soit, par exemple, trop élevée, par rapport à sa valeur nominale VE.k/n, quelle qu'en soit la raison, il en résultera un courant de décharge I'ck tendant à être plus fort et un courant de charge Ick tendant à être plus faible que ce qu'ils seraient nominalement, ce qui tendra à ramener la charge du condensateur Ck à ce qu'elle devrait être. Ceci explique que le fonctionnement du convertisseur multiniveaux soit stable et permette des variations d'amplitude, dans les deux sens, tant du côté de la source de tension que du côté de la source de courant. On verra par la suite que cela soulève néanmoins des problèmes en termes de dynamique.

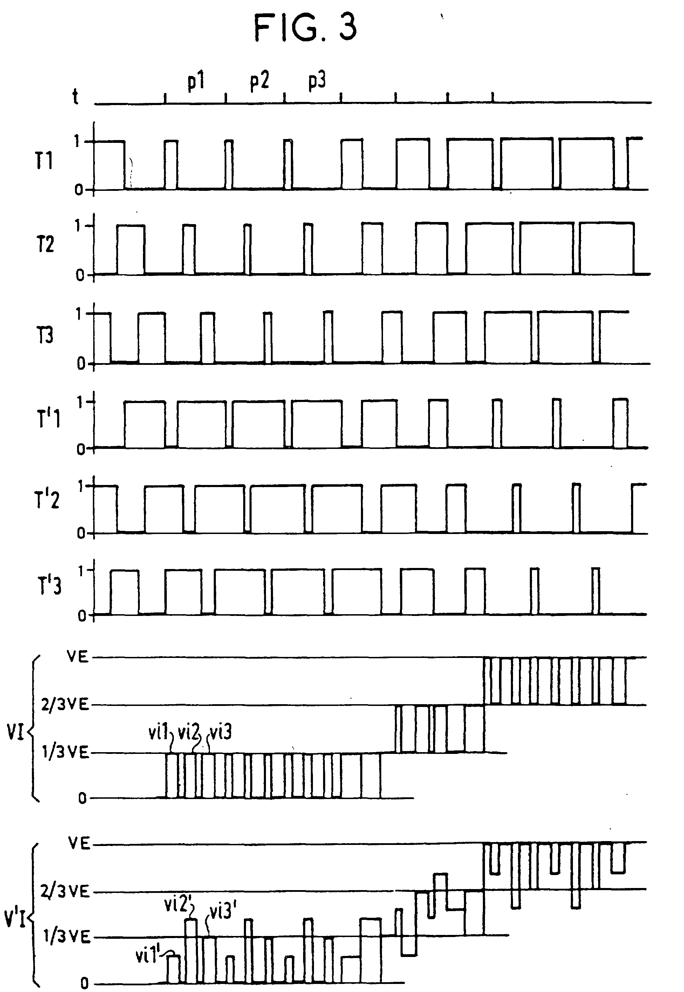

La figure 3 donne un exemple de fonctionnement du convertisseur multiniveaux conforme aux figures 1 et 2, dans le cas où il comprend 3 cellules ; on y applique une commande du type de la modulation PWM, en vue de la fourniture à la source de courant C d'une tension alternative modulée sinusoïdalement, c'est-à-dire que, durant des périodes successives p1, p2, p3... de fonctionnement du convertisseur (ligne t), les interrupteurs T1, T2, T3 sont successivement conducteurs pendant des intervalles de durée variant selon une onde de modulation de la tension de sortie, dite ci-après modulante. Les interrupteurs correspondants T'1, T'2, T'3 sont à chaque instant dans la position opposée.

Bien entendu d'autres modes de modulation du fonctionnement des interrupteurs permettent, comme il est bien connu, d'obtenir le même résultat. Bien entendu encore, le convertisseur peut tout aussi bien servir à fournir à la source de courant C toute autre forme d'onde ou une tension continue régulée.

On considérera d'abord une période p1 de fonctionnement du convertisseur. Au cours de celle-ci, lorsque l'un des interrupteurs T1, T2, T3 est conducteur, les deux autres sont bloqués ; pour chaque ensemble de deux cellules et le condensateur compris entre elles, cela correspond aux états c) et d) décrits plus haut, dans lesquels le condensateur reçoit successivement des charges additionnelles négatives et des charges additionnelles positives, dont la valeur totale est nominalement nulle. On remarquera de plus que, lorsque les cellules imbriquées CL1-CL2 sont dans l'état d), les cellules imbriquées CL2-CL3 sont dans l'état c), de sorte que le condensateur C1 reçoit des charges additionnelles positives par le même courant qui fournit des charges additionnelles négatives au condensateur C2.

La figure 3 illustre additionnellement et à titre d'exemple le fonctionnement du convertisseur multiniveaux dans des périodes p2, p3, etc...,au cours desquelles les durées de conduction des interrupteurs T1, T2, T3 se raccourcissent, puis s'allongent jusqu'à dépasser 1/3 de période, se recouvrant alors. La ligne VI représente ce que serait idéalement la tension transmise à la source de courant, notamment si les condensateurs avaient une capacité telle que les charges additionnelles considérées ne modifiaient sensiblement pas la tension à leurs bornes. La tension VI est exprimée en fractions de la tension VE de la source de tension SE, en prenant comme référence de tension le pôle négatif de la source de tension SE. On voit que cette tension VI contient, d'une part, un fondamental important à la fréquence de la modulante et, d'autre part, des harmoniques d'amplitudes plus faibles à des fréquences supérieures à la fréquence de découpage, qui peuvent être facilement éliminées par un filtre passe-bas. Ce courant étant variable, son intégration par un élément inductif quelconque contenu dans la source de courant mène à ce que le convertisseur fournisse à la source de courant un courant alternatif d'allure sinusoïdale dont la période est égale à celle du fondamental de la tension de sortie.

Le courant variant sinusoidalement, les états c) et d) envisagés plus haut n'apporteront pas des charges additionnelles égales aux condensateurs du convertisseur, puisqu'entre ces deux états, le courant aura eu le temps de varier. Cette variation ne sera négligeable que si la période de fonctionnement des interrupteurs est nettement supérieure à la fréquence de la modulante.

Par ailleurs, il faut s'attendre à ce que le courant alternatif fourni à la source de courant ne soit pas strictement sinusoïdal, mais distordu de façon asymétrique. De même, des écarts de niveaux dans les signaux de commande ou dans les signaux les engendrant, ou encore les différences de temps de commutation entre les divers interrupteurs traversés, rendront inévitablement inégales les durées de conduction des interrupteurs sur une période de fonctionnement du convertisseur, ou décaleront dans le temps les phases de conduction des interrupteurs, ou encore déséquilibreront les courants de charge et de décharge des condensateurs. D'une manière générale, par conséquent, on ne peut garantir en pratique, dans un convertisseur multiniveaux du type décrit, le respect des conditions nominales de fonctionnement, telles qu'elles ont été initialement décrites. Or, un écart de fonctionnement persistant conduit à un écart dans un sens ou dans l'autre de la charge d'un condensateur, donc de sa tension de charge moyenne, donc aussi à une distorsion, à la fréquence de fonctionnement du convertisseur, de la tension fournie à la source de courant.

Cet effet est illustré par le tracé VI' de la figure 3, qui est semblable au tracé VI, à cela près que, le condensateur C1 (figure 1) étant supposé chargé sous une tension plus faible que sa tension de charge nominale, au lieu de fournir des impulsions vi1, vi2, vi3 d'amplitude constante, le convertisseur fournit des impulsions telles que vi1' d'amplitude réduite (l'échelle est exagérée pour une meilleure lisibilité), lorsque le condensateur C1 fournit à la source de courant C sa propre tension de charge, et des impulsions telles que vi2' d'amplitude accrue, lorsque le condensateur C1 soustrait sa propre tension de celle qui est fournie à la source de courant C, ainsi que des impulsions telles que vi3' d'amplitude inchangée, lorsque le condensateur C1 est hors circuit. On voit aisément que, dans le signal VI', cela apporte une composante perturbatrice à ladite fréquence de découpage du convertisseur.

Une telle composante perturbatrice n'existe pas quand les condensateurs sont chargés à leurs tensions nominales respectives. Lorsqu'elle apparaît, elle est généralement nuisible.

Mais, surtout, les tensions auxquelles sont soumis les interrupteurs ne seront alors plus sensiblement égales à la différence des tensions de charge nominales de deux condensateurs adjacents, c'est-à-dire à la valeur de la tension de la source de tension divisée par le nombre d'étages du convertisseur. Cela peut mettre en danger ces interrupteurs.

Bien entendu, comme mentionné précédemment, les écarts de charge des condensateurs tendent spontanément à se résorber, mais ce processus prend du temps.

Par ailleurs, ce processus spontané est mis en oeuvre via la source de courant. Il ne peut donc opérer lorsque la source de courant n'impose pas de courant et, en tout cas, sera ralenti lorsque le courant de la source de courant est réduit.

Il a donc été proposé, dans la demande de brevet français FR-2731565 A1 de prévoir dans un convertisseur multiniveaux, à côté de la commande de modulation précédemment mentionnée, des moyens pour constater, pour chacun desdits condensateurs, un écart de tension éventuel entre la tension de charge moyenne évaluée et la tension de charge moyenne nominale de ce condensateur, ainsi que des moyens de commande complémentaires modifiant la durée dudit premier état de conduction de la cellule associée audit condensateur dans un sens tel que ledit écart de tension constaté soit réduit.

Selon une forme de mise en oeuvre de ce convertisseur multiniveaux amélioré, lesdits moyens de constatation d'écart de tension comprennent chacun des moyens pour recevoir la valeur de la tension de la source de tension, le rang de l'étage et le nombre d'étages, pour déterminer ce que doit être en conséquence la tension de charge nominale de chaque condensateur dans une période de fonctionnement du convertisseur, ledit écart de tension étant alors constaté, pour chaque condensateur du convertisseur, par des moyens de comparaison soustrayant ladite tension moyenne évaluée aux bornes de chaque condensateur de ladite tension de charge nominale des condensateurs.

On pourra se référer d'une manière générale à cette demande de brevet antérieure pour obtenir de nombreux détails de mise en oeuvre et des explications sur le fonctionnement du convertisseur multiniveaux qui ne seront pas reprises dans la présente demande.

Toutefois, les mesures que l'on vient de mentionner visent seulement à corriger des écarts de charge des condensateurs du convertisseur considérés individuellement. Or, comme on l'a déjà exprimé, toute action correctrice visant une des valeurs considérées entraîne également des actions sur les autres valeurs (le charges des autres condensateurs, la tension ou le courant en sortie du convertisseur...), lesquelles sont nuisibles et nécessitent à leur tour des actions correctrices, et ainsi de suite. Le problème que cela pose se complique encore du fait que les temps de réponse correspondant, différents, ne sont pas contrôlés.

La présente invention a donc pour objectif de faire face à ce problème et vise à offrir une solution permettant de répondre avec des constantes de temps réduites et adaptées aux besoins de correction des variations de différentes valeurs caractéristiques du fonctionnement du convertisseur. Elle propose également diverses modalités de mise en oeuvre de cette solution.

Selon l'invention, le convertisseur multiniveaux comprend des moyens de commande collective pour prendre en compte un agrégat de valeurs pondérées relatives chacune à une valeur caractéristique du fonctionnement du convertisseur, cet agrégat commandant, collectivement, des moyens de commande de marche aptes à modifier en conséquence ladite durée du premier état de conduction de toutes les cellules du convertisseur dans un sens propre à atteindre un état d'équilibre dynamique.

Une boucle de régulation est ainsi constituée, adaptant le fonctionnement cyclique de toutes les cellules du convertisseur aux états respectifs de valeurs caractéristiques du fonctionnement du convertisseur. Le temps de réponse de cette boucle peut être de l'ordre de quelques périodes de découpage du convertisseur.

Dans une forme de réalisation, lesdits moyens de commande collective comprennent des moyens d'évaluation d'un écart de courant éventuel entre un courant observé dans ladite source de courant et un courant assigné à cette source de courant, ledit écart entrant dans ledit agrégat.

De préférence, ledit agrégat prend également en compte la somme desdits écarts de tension éventuels.

Comme les écarts de tensions sont évalués à partir de la tension fournie par la source de tension, on est ainsi en présence d'une deuxième boucle de régulation associée à la première, qui adapte le fonctionnement cyclique de toutes les cellules à la tension de la source de tension. Le temps de réponse de cette boucle sera aussi de l'ordre de quelques périodes de découpage du convertisseur.

De préférence aussi, lesdits moyens de commande de marche comprennent un dispositif de commande de marche fournissant un signal de commande à un dispositif de commande de cellule lequel fournit un signal de commande de cellule à l'aide duquel il module en conséquence ladite durée du premier état de conduction d'une première cellule du convertisseur ; dans une forme de mise en oeuvre, cette cellule est celle qui jouxte la source de tension.

De préférence encore, lesdits moyens de commande de marche comprennent un module de commande de marche pour chacune des cellules suivant ladite première cellule et en ce que ces modules de commande de marche sont connectés audit dispositif de commande de cellule et connectés entre eux de façon que le dispositif de commande de marche d'une cellule donnée reçoive le signal de commande de cellule de la cellule précédant cette cellule donnée et l'exploite, en même temps que ledit écart de tension de cette cellule donnée, pour engendrer le signal de commande de cette cellule donnée.

De préférence enfin, ledit écart de courant et/ou lesdits écarts de tension sont pondérables par un paramètre de gain ajustable, de manière à assurer un découplage entre lesdites valeurs caractéristiques composant ledit agrégat.

Les différents objets et caractéristiques de la présente invention apparaîtront plus clairement dans la description qui va suivre de modes de mise oeuvre de l'invention, donnée à titre d'exemple non limitatif, en se reportant aux figures annexées qui représentent :

- la figure 1, déjà décrite, le schéma de principe d'un convertisseur multiniveaux connu
- la figure 2, déjà décrite, le schéma de principe d'un ensemble de deux étages imbriqués du convertisseur multiniveaux de la figure 1,
- la figure 3, déjà décrite, des formes d'ondes décrivant le fonctionnement du convertisseur multiniveaux des figures 1 et 2, dans le cas où il comprend trois étages,
- la figure 4, le schéma de principe de moyens de commande d'un convertisseur multiniveaux du type des figures 1, 2 et 3, agencés pour permettre la mise en oeuvre de l'invention,
- la figure 5, un mode de réalisation du dispositif de constatation d'écart VEn de la figure 4,
- la figure 6, un mode de réalisation du dispositif de commande de marche GRCn+1 de la figure 4,
- la figure 7, un mode de réalisation du dispositif VI de constatation d'écart de courant de la source de courant de la figure 4,
- la figure 8, un mode de réalisation du module de pondération GECn de la figure 4
- la figure 9, un mode de réalisation du dispositif de commande de marche GRCn de la figure 4.

On ne reviendra pas sur la description d'un convertisseur multiniveaux. Les schémas des figures 1, 2 et 3 correspondent à un convertisseur du type décrit dans le document de brevet FR - 2 697 715 A1 auquel le lecteur est renvoyé pour de plus amples détails.

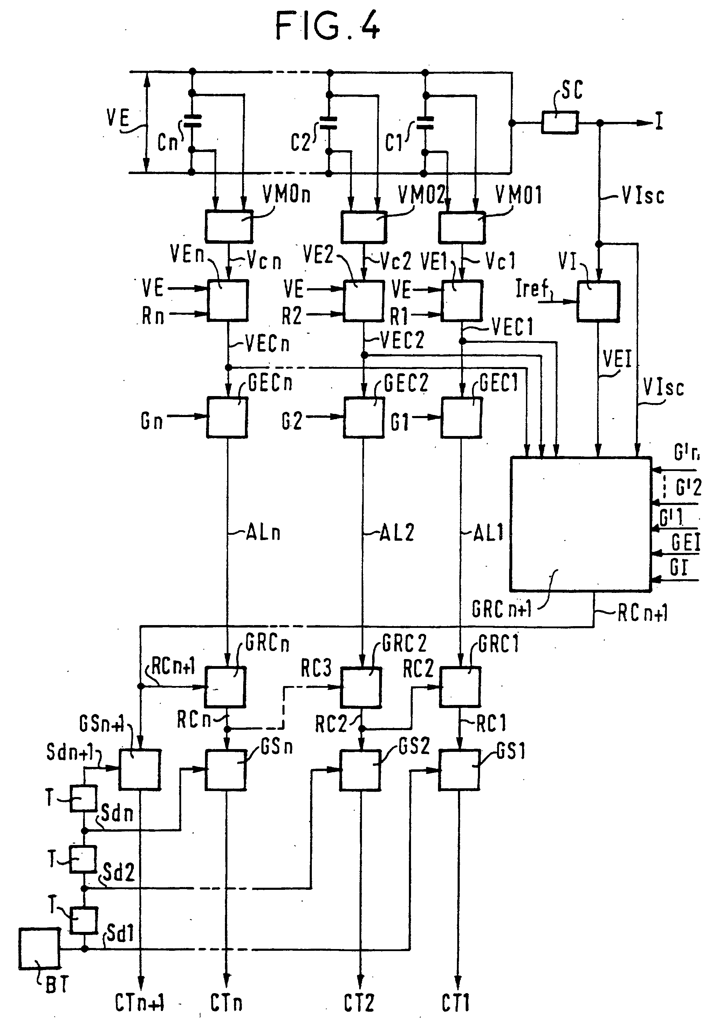

La figure 4 représente l'ensemble des moyens de commande d'un convertisseur similaire à celui de la figure 1, mais ayant n+1 cellules de commutation dont n seulement possèdent en propre un condensateur C1, C2, Cn, le condensateur d'une cellule de rang n+1 se confondant avec la source d'alimentation comme envisagé précédemment. C'est ainsi que, sur la figure 4, seuls ces condensateurs C1, C2..., Cn sont représentés, ainsi qu'une source de courant SC, traversée par un courant I.

A chacun de ces condensateurs est associé un dispositif d'évaluation VMO1, VMO2..., VMOn permettant d'évaluer une tension de charge de chacun des condensateurs. A cette fin, ce dispositif est couplé aux deux bornes du condensateur. Il fournit un signal d'évaluation Vc1, Vc2..., Vcn exprimant la tension de charge existant aux bornes du condensateur.

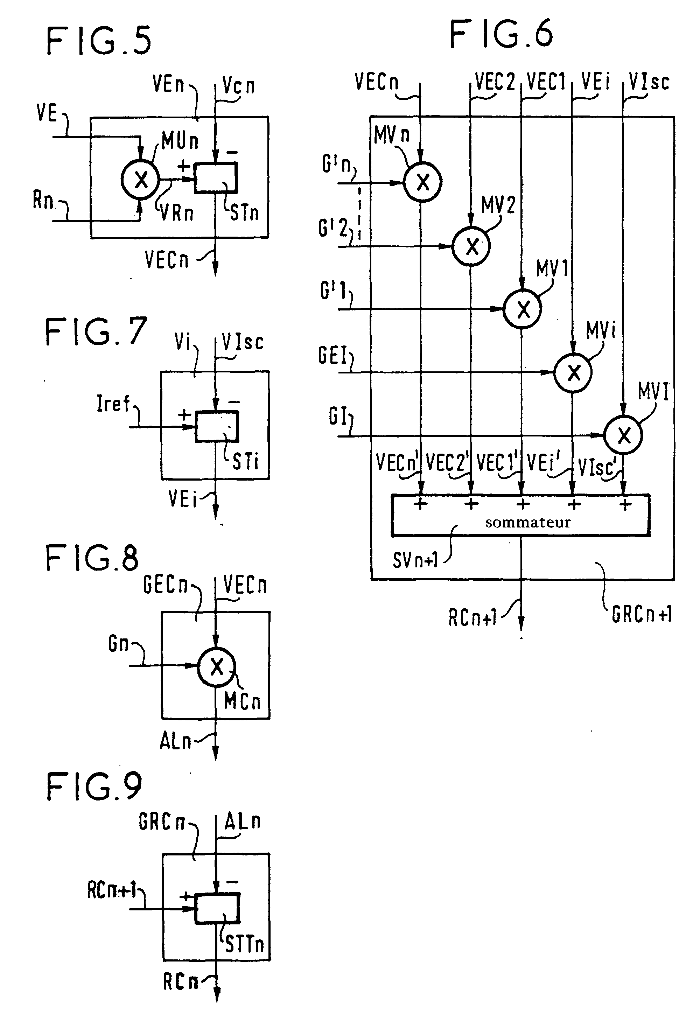

A chacun des condensateurs est également associé un dispositif de constatation d'écart VE1, VE2..., VEn permettant de constater un écart éventuel entre la tension de charge observée, qu'il reçoit du dispositif d'évaluation correspondant, et une tension de charge nominale de ce condensateur. Le dispositif de constatation d'écart VEn est représenté par la figure 5, à titre d'exemple. Il reçoit une grandeur VE qui est la valeur de la tension fournie par la source de tension du convertisseur (voir figure 1) et une constante Rn qui est propre à chaque condensateur et dont l'expression générale est $Rk = k/n+1$, en l'occurence $n/n+1$. Un multiplicateur MUn fournit le produit VRn de ces deux valeurs, qui est la tension de charge nominale du condensateur Cn. Un soustracteur STn retranche la tension de charge observée VCn de la tension de charge nominale VRn et exprime une éventuelle tension d'écart sous la forme d'un signal d'écart VECn. Les autres dispositifs de constatation d'écart sont similaires, avec k prenant respectivement les valeurs entières de n-1 à 1.

Les signaux d'écart ainsi engendrés sont collectivement appliqués à des moyens de commande collective agencés pour prendre en compte un agrégat de valeurs pondérées relatives chacune à une valeur caractéristique du fonctionnement du convertisseur. Ces moyens de commande collective comprennent des moyens de commande de marche aptes à modifier en conséquence ladite durée du premier état de conduction de toutes les cellules du convertisseur dans un sens propre à atteindre un état d'équilibre dynamique.

Spécifiquement, les signaux d'écart considérés sont appliqués à un dispositif de commande de marche GRCn+1, ainsi dénommé parce qu'il commande la marche, c'est-à-dire le fonctionnement d'une cellule du convertisseur, en l'occurence de la cellule de commutation de rang n+1, laquelle n'est associée à aucun condensateur et, à travers celle-ci, la marche de toutes les cellules du convertisseur. Ce dispositif de commande de marche est représenté plus en détail par la figure 6.

Avant de décrire ce dernier, il est bon de considérer d'abord un dispositif VI de constatation d'écart de courant de la source de courant qui est représenté de façon plus détaillée par la figure 7. Ce dispositif est couplé au circuit de la source de courant SC d'une manière qui lui permette de recevoir une représentation VIsc du courant I dans la source de courant SC. Il reçoit par ailleurs une grandeur de commande Iref définissant quel doit être le courant dans la source de courant SC. Ces deux valeurs sont comparées dans un soustracteur STi qui produit un signal VEi, une tension par exemple, représentatif de l'écart entre la valeur observée du courant de charge et sa valeur de commande. Ce signal est également fourni au dispositif de commande de marche GRCn+1.

Le dispositif de commande de marche GRCn+1 reçoit par ailleurs directement la représentation VIsc du courant dans la source de courant.

En revenant à la figure 6, mais aussi à la figure 4, on peut voir que le dispositif de commande de marche GRCn+1 reçoit aussi des grandeurs G'n..., G'2, G'1, GEI et GI qui sont des paramètres de gain par lesquels sont respectivement multipliés les signaux VECn..., VEC2, VEC1, VEi, VIsc, à l'aide de multiplicateurs MVn..., MV2, MV1, MVi, MVI, pour fournir des signaux pondérés VECn'..., VEC2', VEC1', VEi', VIsc' qui sont appliqués à un sommateur SVn+1 fournissant le signal de commande RCn+1 de la cellule de commutateurs de rang n+1. Plus précisément, la valeur de ce signal de commande RCn+1 est convertie, dans un module de commande GSn+1, en un signal de commande de cellule CTn+1 dont la durée est directement fonction de la valeur du signal de commande et qui porte la cellule de commutation de rang n+1 dans ledit premier état de conduction.

Comme déjà mentionné et comme on l'expliquera en détail plus loin, ce même signal détermine aussi, par action en cascade entre des dispositifs de commande GRCn..., GRC2, GRC1 respectivement associés aux condensateurs Cn..., C2, C1, la durée dudit premier état de conduction dans les autres cellules de commutation du convertisseur.

En outre, les signaux d'écart VECn..., VEC2, VEC1 sont indivuellement appliqués à des modules de pondération GECn..., GEC2, GEC1 recevant par ailleurs des paramètres de pondération Gn..., G2, G1 et qui fournissent des signaux pondérés ALn..., AL2, AL1. A titre d'exemple, la figure 8 représente le module GECn, qui contient seulement un multiplicateur MCn pour multiplier le signal d'écart VECn par le paramètre de pondération correspondant Gn. Les autres modules de pondération sont semblables.

Les signaux pondérés ALn..., AL2, AL1 sont respectivement appliqués à des dispositifs de commande de marche GRCn..., GRC2, GRC1 qui reçoivent par ailleurs un signal de transfert RCn+1..., RC3, RC2 et produisent respectivement des signaux de commande RCn..., RC2, RC1 des cellules de commutation successives du convertisseur.. Plus précisément, ces signaux de commande sont appliqués à des modules de commande GSn..., GS2, GS1 agencés pour commander la durée dudit premier état de conduction tel que défini dans ce qui précède, des cellules de commutation de rang n..., 2, 1. La figure 9 représente, à titre d'exemple, le dispositif de commande de marche GRCn. Il reçoit le signal pondéré ALn et, en tant que signal de transfert, le signal de commande RCn+1 de la cellule de convertisseur précédente. Il comprend un circuit de sommation STTn retranchant le signal pondéré ALn du signal de transfert RCn+1, pour fournir le signal de commande RCn. Les dispositifs de commande de marche GRCn-1 (non représenté)..., GRC2, GRC1 sont semblables, le dispositif GRCn-1 recevant le signal de commande RCn, en tant que signal de transfert..., le dispositif GRC2, de même, un signal de commande RC3 et le dispositif GRC1, de même aussi, le signal de commande RC2.

Le fonctionnement d'ensemble des moyens de commande de la figure 4 va maintenant être exposé.

Les modules de commande GSn+1, GSn..., GS2, GS1 fonctionnent en réponse à des signaux de déclenchement Sd1, Sd2..., Sdn, Sdn+1 qui leur sont fournis de façon décalée à chaque période telle que p1 (figure 3) par une base de temps BT, suivie de modules de retard unitaire T, pour la commande décalée dans le temps des cellules de commutation du convertisseur, au cours d'un cycle répété de fonctionnement du convertisseur multiniveaux divisé en n+1 fractions égales.

A chaque impulsion de la base de temps, un module de commande fournit un signal de commande de cellule portant lesdits interrupteurs de la cellule dans ledit premier état de conduction. Au cours d'un cycle de fonctionnement du convertisseur, cela se produit successivement dans les modules de commande GS1, GS2..., GSn, GSn+1. La durée dudit premier état de conduction, donc du signal de commande de cellule qui l'engendre, est fonction, pour chaque cellule, de la valeur du signal de commande que reçoit le module de commande associé à cette cellule.

. La valeur du signal de commande RCn+1 dépend (voir figure 6), additivement, du courant I dans la source de courant SC, de l'écart VEi entre la valeur de ce courant I et une grandeur de commande Iref, et des écarts de tension de charge des condensateurs du convertisseur VEC1, VEC2..., VECn, chacune de ces valeurs étant affectée d'un paramètre de réglage ayant la forme d'un gain et déterminant sa part contributive dans la sommation qui produit le signal de commande RCn+1. L'action sur ces paramètres permet un ajustement aisé du fonctionnement du convertisseur et notamment détermine les temps de réponse aux diverses variations et écarts ainsi pris en compte.

On va supposer initialement qu'aucun des écarts ci-dessus ne se manifeste et qu'un courant est établi dans la source de courant SC . Le signal de commande RCn+1 est donc formé du seul signal VIsc' représentant l'amplitude de ce courant. Il est directement appliqué au module de commande GSn+1 et, en tant que signal de transfert, au dispositif de commande de marche GRCn. Le dispositif de commande de marche GRCn (voir figure 9) soustrait de ce signal RCn+1 le signal pondéré ALn qui est issu d'un écart éventuel dans la tension de charge du condensateur Cn. Or, on a supposé qu'un tel écart n'existe pas. Le signal de commande RCn est donc égal au signal de commande RCn+1. Ce signal de commande RCn est utilisé pour la commande des interrupteurs de la cellule de rang n et, en tant que signal de transfert, par un dispositif de commande de marche GRCn-1 non représenté semblable au dispositif GRCn que l'on vient de décrire. Comme on a supposé aussi que le condensateur Cn-1 (non représenté) ne manifeste aucun écart de tension, le fonctionnement du dispositif de commande de marche GRCn-1 est le même que celui que l'on vient de décrire, et ainsi de suite. En particulier, le dispositif de commande de marche GRC2 reçoit ainsi, lui aussi, un signal de transfert RC3 égal lui aussi au signal RCn+1, fournit un signal de commande RC2 de même valeur, servant de signal de transfert pour le dispositif de commande de marche GRC1 lequel fournit le signal de commande RC1.

En supposant ainsi que tous les condensateurs du convertisseur sont à leur tension de charge nominale et que le courant dans la source de courant est celui qu'indique le signal de référence Iref, on voit que le convertisseur fonctionne de façon stable, la durée dudit premier état de conduction étant la même dans toutes les cellules et restant constante.

On va maintenant supposer que le convertisseur doive fournir une tension d'allure sinusoïdale comme l'illustre la figure 3. La grandeur de commande Iref est alors modifiée, par des moyens de commande non représentés, période de convertisseur après période de convertisseur. Son amplitude décroît, puis s'accroît, à la manière de la durée des impulsions de la ligne T1 de la figure 3. L'amplitude du signal de commande RCn+1 varie en conséquence.

On a vu que le signal de commande RCn+1 était fourni au dispositif de commande de marche GRCn (non représenté) en tant que signal de transfert et se retrouvait dans le signal de commande RCn..., et cela jusqu'au dernier dispositif de commande de marche GRC1, pour se retrouver dans le signal de commande RC1. C'est donc l'allure de marche de l'ensemble du convertisseur qui est modifiée par l'action sur la grandeur de commande Iref et l'on obtient le mode de fonctionnement illustré par la figure 3.

Bien entendu, l'action sur la grandeur Iref permet d'obtenir toute forme de courant de sortie du convertisseur que l'on souhaiterait obtenir.

Bien entendu encore, toute modification spontanée du courant dans la source de courant SC, la grandeur de commande Iref restant inchangée, produit une modification des signaux de commande des cellules du convertisseur tendant à la faire disparaître.

On remarquera que de telles actions, passant par une modification de la durée dudit premier état de conduction dans les cellules du convertisseur impliquent seulement un délai d'action de l'ordre de la période de de convertisseur, c'est-à-dire très court.

Par ailleurs, si la charge des condensateurs du convertisseur est collectivement modifiée par une variation du courant dans la source de courant SC, commandée ou spontanée, la somme des écarts de tensions manifestés par les signaux VECn...VEC1 apparaît dans la valeur du signal de commande RCn+1, après intervention des paramètres de pondérations G'n...G'1. Elle donne lieu ainsi à une action collective, comme on l'a vu précédemment, sur toutes les cellules du convertisseur. Cela renforce la dynamique de la commande et de la régulation de la marche du convertisseur.

On va maintenant supposer que l'un des condensateurs du convertisseur, C2 par exemple, s'est écarté de sa tension de charge nominale. Cela se traduit par un signal d'écart VEC2 non nul. La quantité correspondante, après pondération par le paramètre G'2, modifie en conséquence le signal de commande RCn+1. Comme on vient de le voir, les signaux de commande de toutes les cellules du convertisseur sont modifiés en conséquence.

En outre, le signal d'écart VEC2 est appliqué au module de pondération GEC2, où, multiplié par le paramètre de pondération G2, il forme le signal pondéré AL2. Dans le dispositif de commande de marche GRC2, ce signal pondéré AL2 se retranche du signal de transfert RC3. Les paramètres G'2 et G2 sont tels que le résultat, dans le signal de commande RC2 est une action corrective conforme à ce qui a été expliqué au début de ce texte, tendant à ramener la charge du condensateur C2 à sa valeur nominale. Le contrôle collectif des cellules du convertisseur permet par surcroît d'améliorer la dynamique du retour du convertisseur à la normale.

De plus, le signal de commande RC2 est transmis au dispositif de commande de marche GRC1, en tant que signal de transfert ; cela permet de compenser l'action sur le condensateur C1 qui accompagne l'action sur le condensateur C2, comme expliqué en se référant à la figure 2, par une action en sens contraire sur le condensateur C1.

Enfin, comme on l'a déjà indiqué, les différents gains employés dans la pondération de valeurs caractéristiques du fonctionnement du convertisseur déterminent la dynamique, c'est-à-dire le temps de réponse du convertisseur aux variations spontanées de ces valeurs caractéristiques.

Ces gains doivent aussi naturellement tenir compte du dimensionnement du convertisseur.

Dans une forme de réalisation préférée, l'expression de ces différents gains est :

$$G1 = \frac{-C1 * \rho 1}{Isc_0}$$

$$G2 = \frac{-C2 * \rho 2}{Isc_0}$$

....

$$Gn= \frac{-Cn * \rho n}{Isc_0}$$

$$G'1= \frac{-C1 * \rho 1 * Vc1_0}{VE * Isc_0}$$

$$G'2= \frac{-C2 * \rho 2 * Vc2_0}{VE * Isc_0}$$

....

$$G'n = \frac{-Cn * \rho n * Vcn_0}{VE * Isc_0}$$

$$GEl= \frac{-Lsc * \rho n+1}{VE}$$

$$Gl= \frac{Rsc}{VE}$$

expressions dans lesquelles C1, C2, Cn sont les capacités des condensateurs de mêmes désignations, $Vc1_0$, $Vc2_0$..., $Vcn_0$ sont les tensions nominales aux bornes de ces mêmes condensateurs, $Isc_0$ est le courant nominal de la source de courant SC, Lsc est son inductance et Rsc sa résistance, VE est la tension de la source de tension et $\rho 1$, $\rho 2$..., $\rho n$, $\rho n+1$ sont des gains attachés aux cellules de rangs 1, 2..., n, n+1. Ces gains sont calculés de manière à assurer un découplage entre lesdites valeurs caractéristiques composant ledit agrégat.


**Revendications**

1. Convertisseur multiniveaux comprenant notamment, entre une source de tension (SE) et une source de courant (C), une succession de cellules de commutation commandables (CL1, CL2..., CLn), chacune ayant deux interrupteurs (T1, T'1; T2, T'2...; Tn, T'n), avec un pôle de chacun des deux interrupteurs constituant une paire de pôles amont et l'autre pôle de chacun des interrupteurs constituant une paire de pôles aval, la paire de pôles aval d'une cellule amont étant connectée à la paire de pôles amont d'une cellule aval et la paire de pôles amont d'une première cellule (CL1) étant connectée à ladite source de courant (C), tandis que la paire de pôles aval d'une dernière cellule (CLn) est connectée à ladite source de tension (SE), ce convertisseur comprenant encore un condensateur (C1, C2..., Cn), pour chaque cellule, sauf que celui de la dernière peut être omis quand ladite source de tension (SE) est apte à en jouer le rôle, ainsi que des moyens de commande régissant le fonctionnement nominal du convertisseur en agissant sur les interrupteurs des cellules successives de sorte que les deux interrupteurs d'une même cellule soient toujours respectivement dans des états de conduction opposés, de sorte que, en réponse à des signaux de commande de cellule (CT1, CT2..., CTn) fourni par lesdits moyens de commande, l'un des deux interrupteurs d'une même cellule soit successivement dans un premier état de conduction, puis dans un second état de conduction durant une période cycliquement répétée, et de sorte que, en réponse auxdits signaux de commande de cellules identiques mais décalés dans le temps d'une fraction de ladite période, les interrupteurs des cellules successives aient respectivement le même fonctionnement, mais décalé dans le temps de ladite fraction de période, lesdits condensateurs successifs (C1, C2..., Cn) ayant nominalement des tensions de charge moyennes respectivement croissantes, la tension de charge moyenne nominale du condensateur de chacune desdites cellules étant égale au produit d'une tension (VE) issue de ladite source de tension (SE), par l'inverse du nombre de cellules et par le rang de la cellule ; ce convertisseur comprenant des moyens (VE1, VE2, ..., VEn) pour constater pour chaque condensateur, un écart éventuel de tension entre la tension de charge moyenne évaluée (Vc1, Vc2,..., Vcn) et la tension de charge moyenne nominale (VR1, VR2, ..., VRn) ;

**caractérisé en ce qu'**il comprend des moyens de commande collective (GCRn+1) comportant :

- des moyens pour prendre en compte la somme des valeurs pondérées desdits écarts éventuels de tension, cette somme commandant, collectivement, des moyens de commande de marche (GRC1,...GRCn) aptes à modifier en conséquence la durée du premier état de conduction de toutes les cellules du convertisseur dans un sens propre à atteindre un état d'équilibre dynamique ;

- et des moyens d'évaluation (VI) d'un écart éventuel de courant entre un courant (Isc) observé dans la source de courant et un courant (Iref) assigné à cette source de courant, ledit écart entrant dans ladite somme.

2. Convertisseur multiniveaux conforme à la revendication 1 2, **caractérisé en ce que** lesdits moyens de commande de marche (GRC1...GRCn) comprennent un dispositif de commande de marche fournissant un signal de commande à un dispositif de commande de cellule (GS1,...GSn) lequel fournit ledit signal de commande de cellule (CT1,...CTn) a l'aide duquel il module en conséquence ladite durée du premier état de conduction d'une première cellule du convertisseur.

3. Convertisseur multiniveaux conforme à la revendication 1, **caractérisé en ce que** ladite première cellule est celle qui jouxte la source de courant.

4. Convertisseur multiniveaux conforme à la revendication 1, **caractérisé en ce que** lesdits moyens de commande de marche (GRC1,...GRCn) comprennent un module de commande de marche pour chacune des cellules suivant ladite première cellule et **en ce que** ces modules de commande de marche sont connectés audit dispositif de commande de cellule (GS1,...GSn) et connectés entre eux de façon que le dispositif de commande de marche d'une cellule donnée reçoive le signal de commande de cellule de la cellule précédant cette cellule donnée et l'exploite, en même temps que ledit écart de tension de cette cellule donnée, pour engendrer le signal de commande de cette cellule donnée.

5. Convertisseur multiniveaux conforme à l'une quelconque des revendications précédentes, **caractérisé en ce que** ledit écart de courant et/ou lesdits écarts de tension sont pondérables par un paramètre de gain ajustable.

**Patentansprüche**

1. Multipegelwandler, insbesondere zwischen einer Spannungsquelle (SE) und einer Stromquelle (C) eine Folge von steuerbaren Kommutationszellen (CL1, CL2..., Cln) aufweisend, wobei eine jede zwei Schalter (T1, T'1; T2, T'2...; Tn, T'n) mit einem Pol aufweist, wobei ein Pol jedes der beiden Schalter ein Paar stromaufwärtiger Pole bildet und der andere Pol jedes der Schalter ein Paar stromabwärtiger Pole bildet, wobei das Paar stromabwärtiger Pole einer stromaufwärtigen Zelle an das Paar stromaufwärtiger Pole einer stromabwärtigen Zelle angeschlossen ist und das Paar stromaufwärtiger Pole einer ersten Zelle (CL1) an die Stromquelle (C) angeschlossen ist, wohingegen das Paar stromabwärtiger Pole einer letzten Zelle (CLn) an die Spannungsquelle (SE) angeschlossen ist, wobei dieser Wandler ferner einen Kondensator (C1, C2..., Cn) für eine jede Zelle aufweist, außer dass derjenige der letzten Zelle weggelassen werden kann, wenn die Spannungsquelle (SE) geeignet ist, seine Aufgabe zu übernehmen, sowie Steuermittel, die die nominale Funktionsweise des Wandlers verwalten, indem sie auf die Schalter der aufeinanderfolgenden Zellen derart einwirken, dass die beiden Schalter einer selben Zelle stets jeweils in entgegengesetzten Leitungszuständen sind, so dass als Antwort auf durch die Steuermittel gelieferten Signale (CT1, CT2..., CTn) zur Steuerung einer Zelle, einer der beiden Schalter einer selben Zelle aufeinanderfolgend in einem ersten Leitungszustand, dann in einem zweiten Leitungszustand während einer zyklisch wiederholten Periode ist, und so dass als Antwort auf die identischen Signale zur Steuerung von Zellen, welche Steuersignale jedoch in der Zeit eines Abschnitts der Periode versetzt sind, die Schalter der aufeinanderfolgenden Zellen jeweils dieselbe Funktionsweise haben, jedoch in der Zeit des Periodenabschnitts versetzt, wobei die aufeinanderfolgenden Kondensatoren (C1, C2..., Cn) nominal jeweils wachsende mittlere Ladespannungen haben, wobei die mittlere Nennladespannung des Kondensators einer jeden der Zellen gleich dem Produkt einer Spannung (VE), die von der Spannungsquelle (SE) stammt, aus dem Kehrwert der Zellenanzahl und aus dem Rang der Zelle ist; wobei dieser Wandler Mittel (VE1, VE2, ..., VEn) aufweist, um für jeden Kondensator einen eventuellen Spannungsunterschied zwischen der evaluierten mittleren Ladespannung (Vc1, Vc2,..., Vcn) und der mittleren Nennladespannung (VR1, VR2, ..., VRn) festzustellen;
**dadurch gekennzeichnet, dass** er Mittel (GCRn+1) zur kollektiven Steuerung umfasst, aufweisend:

- Mittel, um die Summe der gewichteten Werte der eventuellen Spannungsunterschiede zu berücksichtigen, wobei diese Summe kollektiv Mittel (GRC1,... GRCn) zum Steuern des Laufs steuert, die geeignet sind, folglich die Dauer des ersten Leitungszustands aller Zellen des Wandlers in einer Richtung zu modifizieren, die geeignet ist, um einen dynamischen Gleichgewichtszustand zu erreichen;

- und Mittel (VI) zum Evaluieren eines eventuellen Stromunterschieds zwischen einem Strom (Isc), der in der Stromquelle beobachtet wird, und einem Strom (Iref), der dieser Stromquelle zugewiesen ist, wobei der Unterschied in die Summe eingeht.

2. Multipegelwandler nach Anspruch 1, 2,
**dadurch gekennzeichnet, dass** die Mittel (GRC1, ...GRCn) zum Steuern des Laufs eine Lauf-Steuervorrichtung aufweisen, die ein Steuersignal an eine Vorrichtung (GS1, ...GSn) zur Steuerung einer Zelle liefert, welche Steuervorrichtung das Signal (CT1, ...CTn) zur Steuerung einer Zelle liefert, mit dessen Hilfe sie folglich die Dauer des ersten Leitungszustands einer ersten Zelle des Wandlers moduliert.

3. Multipegelwandler nach Anspruch 1,

**dadurch gekennzeichnet, dass** die erste Zelle diejenige ist, die an die Stromquelle angrenzt.

4.    Multipegelwandler nach Anspruch 1,
**dadurch gekennzeichnet, dass** die Mittel (GRC1, ...GRCn) zum Steuern des Laufs ein Modul zum Steuern des Laufs für eine jede der Zellen aufweisen, die der ersten Zelle folgen, und dass diese Module zum Steuern des Laufs an die Vorrichtung (GS1, ...GSn) zum Steuern einer Zelle angeschlossen und untereinander derart angeschlossen sind, dass die Vorrichtung zum Steuern des Laufs einer gegebenen Zelle das Zellsteuersignal der dieser gegebenen Zelle vorangehenden Zelle empfängt und es verarbeitet, gleichzeitig mit dem Spannungsunterschied dieser gegebenen Zelle, um das Signal zur Steuerung dieser gegebenen Zelle zu erzeugen.

5.    Multipegelwandler nach einem beliebigen der vorstehenden Ansprüche,
**dadurch gekennzeichnet, dass** der Stromunterschied und/oder die Spannungsunterschiede durch einen regelbaren Gewinnparameter ponderabel sind.

**Claims**

1.    A multilevel converter comprising, in particular, between a voltage source (SE) and a current source (C), a succession of controllable switching cells (CL1, CL2, ..., CLn), each having two switches (T1, T'1; T2, T'2; ...; Tn, T'n), with one pole of each of the two switches forming part of a pair of upstream poles and the other pole of each of the switches forming part of a pair of downstream poles, the pair of downstream poles of an upstream cell being connected to the pair of upstream poles of a downstream cell, and the pair of upstream poles of a first cell (CL1) being connected to said current source (C), while the pair of downstream poles of a last cell (CLn) is connected to said voltage source (SE), the converter also comprising a respective capacitor (C1, C2, ..., Cn) for each cell, except that the capacitor of the last cell may be omitted when said voltage source (SE) is suitable for performing the same role, the converter also comprising control means governing the nominal operation of the converter and acting on the switches of the successive cells in such a manner that the two switches of any one cell are always in respective opposite conduction states, such that in response to cell control signals (CT1, CT2, ..., CTn) delivered by said control means, one of the two switches in a given cell is successively in a first conduction state and then in a second conduction state during a cyclically repeated converter period, and such that in response to said cell control signals that are identical but offset in time by a fraction of said period, the switches of successive cells function respectively in the same manner but offset in time by said fraction of a period, said successive capacitors (C1, C2, ..., Cn) having respective increasing nominal mean charge voltages, the nominal mean charge voltage of the capacitor in each of said cells being equal to the product of a voltage (VE) from said voltage source (SE) multiplied by the reciprocal of the number of cells and by the rank of the cell; the converter comprising means (VE1, VE2, ..., VEn) for observing for each capacitor, any voltage difference between the evaluated mean charge voltage (Vc1, Vc2, ..., Vcn) and the nominal mean charge voltage (VR1, VR2, ..., VRn);
    the converter being **characterized in that** it includes collective control means (GCRn+1) comprising:

    means for taking into account the sum of the weighted values of said voltage differences if there are any, the sum collectively controlling ON-time control means (GRC1, ..., GRCn) suitable for altering accordingly the duration of the first conduction state of all of the cells of the converter in a direction suitable for reaching a state of dynamic equilibrium; and
    means (VI) for evaluating any current difference between an observed current (Isc) through the source and a current (Iref) assigned to said current source, said difference being included in said sum.

2.    A multilevel converter according to claim 1, **characterized in that** said ON-time control means (GRC1, ..., GRCn) comprise an ON-time control circuit delivering a control signal to a cell control circuit (GS1, ..., GSn) which delivers said cell control signal (CT1, ..., CTn) by means of which it modulates accordingly said duration of the first conduction state of a first cell of the converter.

3.    A multilevel converter according to claim 1, **characterized in that** said cell is the cell adjacent to the current source.

4.    A multilevel converter according to claim 1, **characterized in that** said ON-time control means (GRC1, ..., GRCn) comprise an ON-time control module for each of the cells following said first cell, and **in that** the ON-time control modules are connected to said cell control circuit (GS1, ..., GSn), and the ON-time control modules are connected together in a manner such that the ON-time control circuit of a given cell receives the cell control signal of the cell preceding the given cell, and uses it, together with said voltage difference of the given cell, to generate the control signal for controlling the given cell.

5. A multilevel converter according to any preceding claim, **characterized in that** said current difference and/or said voltage differences can be weighted by an adjustable gain parameter.

# FIG.1

# FIG.2

# FIG. 3

# FIG.4

# FIG.5

# FIG.6

# FIG.7

# FIG.8

# FIG.9